(19) **Europäisches Patentamt**

**European Patent Office**

**Office européen des brevets**

(11) **EP 1 729 117 A2**

(12) **EUROPÄISCHE PATENTANMELDUNG**

(43) Veröffentlichungstag:
06.12.2006 Patentblatt 2006/49

(51) Int Cl.:
*G01N 25/54* (2006.01)

(21) Anmeldenummer: 06112061.4

(22) Anmeldetag: 31.03.2006

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **31.05.2005 DE 102005015501**

(71) Anmelder: **BUNDESANSTALT FÜR MATERIALFORSCHUNG UND -PRUFUNG (BAM)**
**D-12205 Berlin (DE)**

(72) Erfinder:
• **Mitropetros, Dr. Konstantinos**
**12167, Berlin (DE)**
• **Fomine, Dr. Pavel**
**12355, Berlin (DE)**
• **Hieronymus, Dr. Hartmut**
**12355, Berlin (DE)**

(74) Vertreter: **Schneider, Henry et al**
**Anwaltskanzlei**
**Gulde Hengelhaupt Ziebig & Schneider**
**Wallstrasse 58/59**
**10179 Berlin (DE)**

(54) **Verfahren und Vorrichtung zur Bestimmung der Zündbedingungen für ein Gasgemisch**

(57) Die Erfindung betrifft ein Verfahren und eine Vorrichtung zur Bestimmung der Zündbedingungen für ein Gas oder Gasgemisch.

Es ist Aufgabe der vorliegenden Erfindung, ein Verfahren und eine Vorrichtung zur Bestimmung der Zündbedingungen für ein Gas oder Gasgemisch anzugeben, mit denen die Zündbedingungen des Gases oder Gasgemisches bei geringen Kosten für einen großen Druck- und Temperaturbereich sehr genau ermittelt werden können.

Dazu wird zunächst ein definiertes Volumens ($V_0$) des Gases oder Gasgemisches (10) in eine Flüssigkeit (12) eingebracht, wobei das in die Flüssigkeit (12) eingebrachte Gas oder Gasgemisch (10) eine Anfangstemperatur ($T_0$) und einen Anfangsdruck ($P_0$) aufweist, nachfolgend wird eine zeitlich definierte Erhöhung des Druckes der Flüssigkeit (12) vorgenommen, und nachfolgend der Zeitpunktes ($t_{ign}$) der Zündung des Gases oder Gasgemisches (10) bestimmt, wobei aus der Anfangstemperatur ($T_0$) und dem Anfangsdruck ($P_0$) des Gases oder Gasgemisches (10), aus der zeitlich definierten Erhöhung des Druckes der Flüssigkeit (12) sowie aus dem Zündzeitpunkt ($t_{ign}$) die Temperatur ($T_{ign}$) und der Druck ($P_{ign}$) des Gases oder Gasgemisches (10) im Zündzeitpunkt ($t_{ign}$) ermittelt werden.

Fig. 3

EP 1 729 117 A2

# EP 1 729 117 A2

## Beschreibung

Die Erfindung betrifft ein Verfahren und eine Vorrichtung zur Bestimmung der Zündbedingungen für ein Gas oder Gasgemisch mit den in den Ansprüchen 1 und 11 genannten Merkmalen.

Gasgemische wie brennbare Gase und Dämpfe sind häufig an chemischen Prozessen beteiligt. Um sowohl damit verbundene Explosionsrisiken abschätzen als auch den sicheren und optimalen Betrieb dieser Prozesse gewährleisten zu können, ist es notwendig, relevante sicherheitstechnische Kenngrößen unter erhöhtem Druck und unter erhöhter Temperatur zu kennen. Die Kenntnis dieser Bedingungen kann sowohl für den ungestörten als auch für den gestörten Betrieb erheblich sein. Ein Gasgemisch ist eine gasförmige Substanz im Gemisch mit einem Trägergas (z. B. Luft). Es gibt jedoch auch gasförmige Substanzen wie beispielsweise Acetylen, die unter erhöhtem Druck und erhöhter Temperatur auf Grund einer Zersetzungsreaktion explodieren. In diesem Fall ist kein Trägergas nötig.

Für Umgebungstemperatur und Normaldruck ist das Explosionsverhalten von Gasgemischen ausführlich in der Literatur, beispielsweise in High, M. S, and R. P. Danner, "Prediction of upper flammability limit by a group contribution method", Ind. Eng. Chem. Res., 26, 1395 (1987) beschrieben. Für erhöhte Temperatur und erhöhten Druck sind nur Daten in begrenztem Umfang vorhanden. Beispielsweise können die Explosionsgrenzen bei erhöhtem Druck und bei erhöhter Temperatur erheblich von den Werten bei Normalbedingungen abweichen. Theoretische Voraussagen des Explosionsverhaltens bleiben schwierig und ungenau. Aus diesen Gründen ist regelmäßig die experimentelle Bestimmung des Explosionsverhaltens bei prozessrelevanten Bedingungen notwendig.

Bei der experimentellen Bestimmung des Explosionsverhaltens von Gasgemischen kann es einerseits erforderlich sein, Druck und Temperatur (sowie die bei der Explosion in der Mischung auftretenden Drücke) zu bestimmen, bei denen eine bestimmte Gasmischung (bekannte Zusammensetzung und bekannte Konzentration) zur Explosion gebracht wird. Dabei ist es wünschenswert, die Temperatur und den Druck des zu untersuchenden Gasgemisches gleichzeitig und unabhängig voneinander variieren zu können. Andererseits kann es erforderlich sein, die Explosionsgrenzen eines brennbaren Gasgemisches zu bestimmen, das heißt diejenige Konzentration einer gasförmigen Substanz in einem Trägergas (z. B. Luft) zu bestimmen, die erforderlich ist, damit das Gasgemisch (Substanz und Trägergas) bei einem vordefinierten Druck und einer vordefinierten Temperatur (durch Selbstentzündung) zur Explosion gebracht wird.

Ein Verfahren zur Bestimmung der Zündtemperatur von brennbaren Flüssigkeiten und Gasen ist aus DIN 51794 "PRÜFUNG VON MINERALÖL-KOHLENWASSERSTOFFEN - BESTIMMUNG DER ZÜNDTEMPERATUR" (2003) bekannt. Ein Verfahren zur Bestimmung der Explosionsgrenzen ist für Drücke bis zu 1 bar und für Temperaturen bis zu 200°C aus DIN EN 1839, "BESTIMMUNG DER EXPLOSIONSGRENZEN VON GASEN UND DÄMPFEN" (2003); für Drücke bis zu 1 bar und für Temperaturen bis zu 150°C aus ASTM E 681, "STANDARD TEST METHOD FOR CONCENTRATION LIMITS OF FLAMMABILITY OF CHEMICALS (VAPORS AND GASES)", Rev. 01 (2001) und für Drücke bis zu 13.8 bar und für Temperaturen bis zu 200°C aus ASTM E 918, "STANDARD PRACTICE FOR DETERMINING LIMITS OF FLAMMABILITY OF CHEMICALS AT ELEVATED TEMPERATURE AND PRESSURE", Rev. 83 (1999) bekannt.

Das oben genannte Verfahren zur Bestimmung der Zündtemperatur von brennbaren Flüssigkeiten und Gasen weist den Nachteil auf, dass die Zusammensetzung des während der Messung gezündeten Gasgemisches nicht bekannt ist. Weiterhin ist dieses Standardverfahren auf Atmosphärendruck beschränkt.

Die oben genannten Verfahren zur Bestimmung der Explosionsgrenzen weisen nachteilhafterweise einen beschränkten Bereich des Anfangsdruckes auf. Ein weiterer Nachteil besteht darin, dass ein großes Volumen des explosionsfähigen Gasgemisches für jede Messung benötigt wird. (für die oben genannten Messungen wird regelmäßig ein Behälter mit einem Volumen von 1 l oder 20 l verwendet).

Aus M. Goethals, B. Vanderstraeten, J. Berghmans, G. De Smedt, S. Vliegen and E. Van't Oost, "Experimental study of the flammability limits of toluene-air mixtures at elevated pressure and temperature", Journal of Hazardous Materials, Volume 70, Issue 3, 31 December 1999, Pages 93-104; M. Caron, M. Goethals, G. De Smedt, J. Berghmans, S. Vliegen, E. Van't Oost and A. van den Aarssen, "Pressure dependence of the auto-ignition temperature of methane/air mixtures", Journal of Hazardous Materials, Volume 65, Issue 3, 19 March 1999, Pages 233-244 und M. Gödde, E. Brandes, W. O. Möller, H. K. Gammenga, "Zündtemperatur bei erhöhtem Ausgangsdruck", 8. Kolloquium zu Fragen der chemischen und physikalischen Sicherheitstechnik 1. und 2. Juni 1999 in Berlin (Tagungsbericht), Seiten 71-75 sind Verfahren bekannt, die zur Bestimmung der Explosionsgrenzen von Gasgemischen einen geschlossenen kugelförmigen Autoklav vorsehen. Dabei sind Messungen bei erhöhten Drücken prinzipiell möglich. Hierbei wird die Explosion nach der Zündung durch eine Messung des Druckverlaufs im Autoklav beobachtet.

Diese Verfahren haben den jedoch den Nachteil, dass Anfangsdruck und Anfangstemperatur im Autoklav aus Arbeitssicherheits- und Kostengründen keinen besonders hohen Wert annehmen können. Daher ist der Anfangsdruck bei diesen Methoden auf maximal 50 bis 60 bar begrenzt. Ein weiterer Nachteil besteht darin, dass die Durchführung der Messungen einen erheblichen Zeit- und Kostenaufwand erfordert.

Es ist daher Aufgabe der vorliegenden Erfindung, ein Verfahren und eine Vorrichtung zur Bestimmung der Zündbedingungen für ein Gas oder Gasgemisch anzugeben, mit denen die Zündbedingungen des Gases oder Gasgemisches bei geringen Kosten für einen großen Druck- und Temperaturbereich sehr genau ermittelt werden können. Dabei sollen Druck und Temperatur gleichzeitig und voneinander unabhängig variiert werden können. Weiterhin soll das erfindungsgemäße Verfahren mit geringeren Sicherheitsanforderungen durchführbar sein. Weiterhin soll ein geringeres Probenvolumen (des Gases oder Gasgemisches) zur Bestimmung der relevanten Parameter erforderlich sein.

Diese Aufgaben werden erfindungsgemäß durch die Merkmale der Ansprüche 1 (Verfahrensanspruch) und 11 (Vorrichtungsanspruch) gelöst. Zweckmäßige Ausgestaltungen der Erfindung sind in den Unteransprüchen enthalten.

Ein besonderer Vorteil des erfindungsgemäßen Verfahrens liegt in der Breite des Bereiches, in dem die Parameter Druck und Temperatur variiert werden können. Das erfindungsgemäße Verfahren zur Bestimmung der Zündbedingungen für ein Gas oder Gasgemisch ist durch:

- das Einbringen eines definierten Volumens des Gases oder Gasgemisches in eine Flüssigkeit, wobei das in die Flüssigkeit eingebrachte Gas oder Gasgemisch eine Anfangstemperatur und einen Anfangsdruck aufweist,
- eine zeitlich definierte Erhöhung des Druckes der Flüssigkeit, und
- die Bestimmung des Zeitpunktes der Zündung des Gases oder Gasgemisches, wobei aus der Anfangstemperatur und dem Anfangsdruck des Gases oder Gasgemisches, aus der zeitlich definierten Erhöhung des Druckes der Flüssigkeit sowie aus dem Zündzeitpunkt die Temperatur und der Druck des Gases oder Gasgemisches im Zündzeitpunkt ermittelt werden,

gekennzeichnet. Vorzugsweise erfolgt die Bestimmung des Zeitpunktes der Zündung des Gases oder Gasgemisches mittels eines optischen Verfahrens. In einer besonders bevorzugten Ausführungsvariante der Erfindung werden vom Gas oder Gasgemisch zur Bestimmung des Zeitpunktes der Zündung des Gases oder Gasgemisches während der zeitlich definierten Erhöhung des Druckes der Flüssigkeit Lichtbildaufnahmen von der Gas(gemisch)blase gefertigt, wobei durch Auswertung der Lichtbildaufnahmen der Zündzeitpunkt bestimmt wird. Vorzugsweise werden während der zeitlich definierten Erhöhung des Druckes der Flüssigkeit sukzessive Lichtbildaufnahmen mit einer Frequenz von größer als 1 KHz, besonders bevorzugt größer als 100 KHz gefertigt. Dadurch, dass das Gas oder Gasgemisch erfindungsgemäß in einer Flüssigkeit angeordnet wird, deren Druck dann erhöht wird, was nachfolgend zur Selbstzündung des Gases (Gasgemisches) führt, können die relevanten Parameter auch für sehr hohe Drücke und Temperaturen bei geringen Volumina des Gases oder Gasgemisches sehr sicher bestimmt werden, da die durch die Explosion (Zündung) entstehende Druckwelle zunächst von der Flüssigkeit aufgenommen wird.

In einer alternativen, bevorzugten Ausführungsvariante der Erfindung werden zur Bestimmung des Zeitpunktes der Zündung des Gases oder Gasgemisches Druckmessungen an mindestens zwei Punkten, die vom in die Flüssigkeit eingebrachten Gas oder Gasgemisch unterschiedlich beabstandet sind, durchgeführt, wobei der Zündzeitpunkt des Gases oder Gasgemisches aus den unterschiedlichen Zeitpunkten, zu denen die durch die Zündung des Gases oder Gasgemisches entstandene Druckwelle die Messpunkte erreicht, ermittelt wird.

Vorzugsweise wird die zeitlich definierte Erhöhung des Druckes der Flüssigkeit derart vorgenommen, dass der im Gas oder Gasgemisch erzeugte Druckanstieg mit einem vordefinierten Temperaturanstieg bzw. mit einem zeitlich definierten Verlauf der Temperatur einhergeht. Sollen beispielsweise gleichzeitig eine Druckerhöhung und eine Temperaturerhöhung des Gases oder Gasgemisches realisiert werden, wird der Druck der das Gas oder Gasgemisch umgebenden Flüssigkeit sehr schnell erhöht, so dass es zu einer adiabatischen oder nahezu adiabatischen Blasenkompression (der Gasgemisch-Blase) kommt. Soll hingegen lediglich der Druck, aber nicht die Temperatur erhöht werden, wird der Druck der das Gas oder Gasgemisch umgebenden Flüssigkeit sehr langsam erhöht, so dass es zu einer isothermen oder nahezu isothermen Blasenkompression kommt. Die Geschwindigkeit der Druckerhöhung hängt von der verwendeten Flüssigkeit, dem Gas/Gasgemisch sowie dem Verhältnis von Druckanstieg und Temperaturanstieg des Gases oder Gasgemisches ab. Die Druckerhöhung der das Gas/Gasgemisch umgebenden Flüssigkeit kann zeitlich so gesteuert werden, dass bei steigendem Druck auch die Temperatur in gewünschter Weise steigt.

Das vordefinierte Volumen des Gases oder Gasgemisches wird vorzugsweise mittels einer Düse, die sich vorzugsweise am Boden eines Autoklavs befindet, in die (im Autoklav befindliche) Flüssigkeit eingebracht. Vorzugsweise wird die Flüssigkeit in einem Behältnis (vorzugsweise Autoklav) gehalten und das Gas oder Gasgemisch (die Gas (gemisch)blase) zur Messung derart im Behältnis angeordnet, dass die Gas(gemisch)blase in sämtliche Richtungen über eine Distanz von der Flüssigkeit umgeben ist, wobei diese Distanz mindestens das 10fache des Durchmessers des Volumens der Gas(gemisch)blase beträgt.

Zur Vermeidung von Wandeffekten bei der Zündung des Gases oder Gasgemisches ist es erfindungsgemäß vorgesehen, dass das Volumen der Flüssigkeit mindestens das 100fache des Volumens des Gasgemisches beträgt.

Die erfindungsgemäße Vorrichtung zur Bestimmung der Zündbedingungen für ein Gas oder Gasgemisch ist durch:

- Mittel zum Einbringen eines definierten Volumens des Gases oder Gasgemisches in eine Flüssigkeit,
- Mittel zur zeitlich definierten Erhöhung des Druckes der Flüssigkeit,

- Mittel zur Bestimmung des Zeitpunktes der Zündung des Gases oder Gasgemisches, und
- Mittel zur Berechnung von Temperatur und Druck des Gases oder Gasgemisches im Zündzeitpunkt aus Anfangstemperatur und Anfangsdruck des Gases oder Gasgemisches, aus der zeitlich definierten Erhöhung des Druckes der Flüssigkeit sowie aus dem Zündzeitpunkt des Gases oder Gasgemisches

gekennzeichnet.

Vorzugsweise weist die Vorrichtung ein Gefäß auf, in dem sich die Flüssigkeit befindet. Dieses Gefäß ist vorzugsweise ein Autoklav. Das Mittel zur Berechnung von Temperatur und Druck des Gases oder Gasgemisches umfasst vorzugsweise ein Datenverarbeitungsgerät. Das Mittel zum Einbringen eines definierten Volumens des Gases oder Gasgemisches (Gasblase eines definierten Volumens) in die Flüssigkeit ist vorzugsweise eine Pipette

Vorzugsweise weist das Mittel zur zeitlich definierten Erhöhung des Druckes der Flüssigkeit einen mechanisch betriebenen Kolben auf.

Vorzugsweise weist das Mittel zur Bestimmung des Zeitpunktes der Zündung des Gases oder Gasgemisches eine Lichtbildkamera auf, die mehr als 100.000 Lichtbilder pro Sekunde, besonders bevorzugt 1.000.000 Lichtbilder pro Sekunde aufnimmt. In einer alternativen, bevorzugten Ausführungsvariante der Erfindung weist das Mittel zur Bestimmung des Zeitpunktes der Zündung des Gases oder Gasgemisches mindestens zwei Drucksensoren sowie ein Datenverarbeitungsgerät auf, wobei mindestens zwei der Drucksensoren einen unterschiedlichen Abstand vom in die Flüssigkeit eingebrachten Gas oder Gasgemisch (Gasblase) aufweisen.

Die Erfindung wird nachstehend anhand eines Ausführungsbeispiels näher erläutert.

Es zeigen:

Fig. 1       eine schematische Schnittdarstellung eines in eine Flüssigkeit eingebrachten Gasgemisches mit einem definierten Volumen $V_0$, einer Anfangstemperatur $T_0$ und einem Anfangsdruck $P_0$,

Fig. 2       eine schematische Schnittdarstellung des in der Flüssigkeit befindlichen Gasgemisches nach Erhöhung des Drukkes der Flüssigkeit (Zündzeitpunkt),

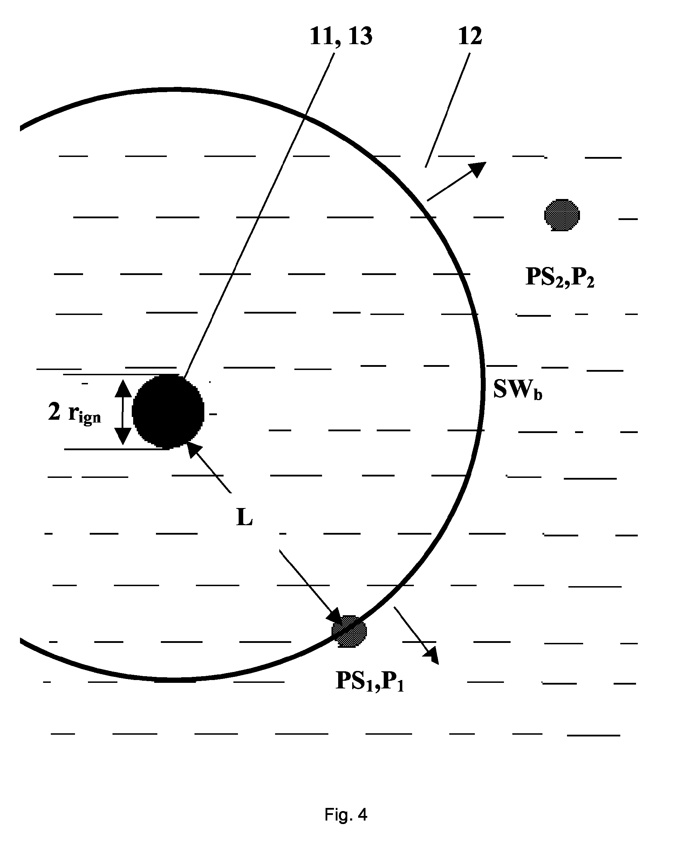

Fig. 3 und Fig. 4       eine schematische Schnittdarstellung des in der Flüssigkeit befindlichen Gasgemisches nach der Zündung,

Fig. 5       eine schematische Darstellung von Lichtbildaufnahmen des in die Flüssigkeit eingebrachten Gasgemisches vor der Druckerhöhung der Flüssigkeit, während der Druckerhöhung der Flüssigkeit sowie während und nach der Selbstzündung des Gasgemisches,

Fig. 6 a)       den Bereich der Drücke und Temperaturen, die durch eine adiabatische Kompression der Gasblase (des Gasgemisches) bei einem Anfangsdruck von 1 bar, einer Temperatur von 273 K bis 373 K und einem Adiabatenexponent von $\gamma = 1.666$ erreicht werden können,

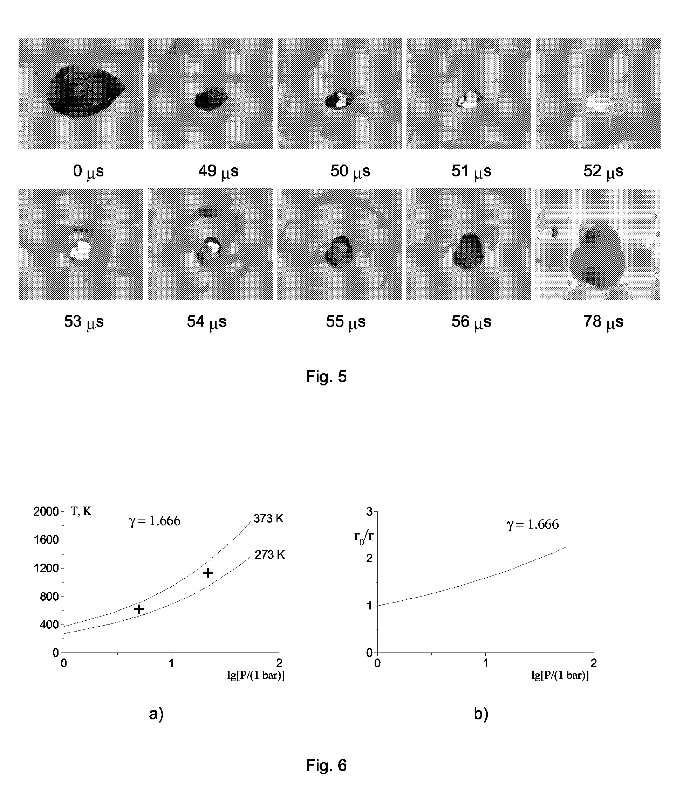

Fig. 6 b)       den auf den Anfangsradius $r_0$ der Gasblase normierten inversen Blasenradius $r_0/r$ als Funktion des logarithmischen Druckes lg(P [bar]),

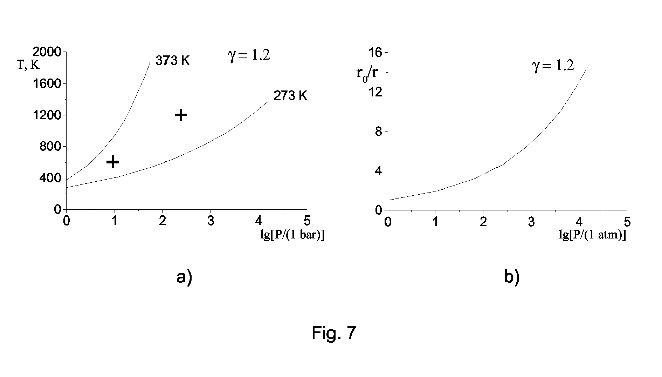

Fig. 7 a)       den Bereich der Drücke und Temperaturen, die durch eine adiabatische Kompression der Gasblase (des Gasgemisches) bei einem Anfangsdruck von 1 bar, einer Temperatur von 273 K bis 373 K und einem Adiabatenexponent von $\gamma = 1.2$ erreicht werden können, und

Fig. 7 b)       den auf den Anfangsradius $r_0$ der Gasblase normierten inversen Blasenradius $r_0/r$ als Funktion des logarithmischen Druckes lg(P [bar]).

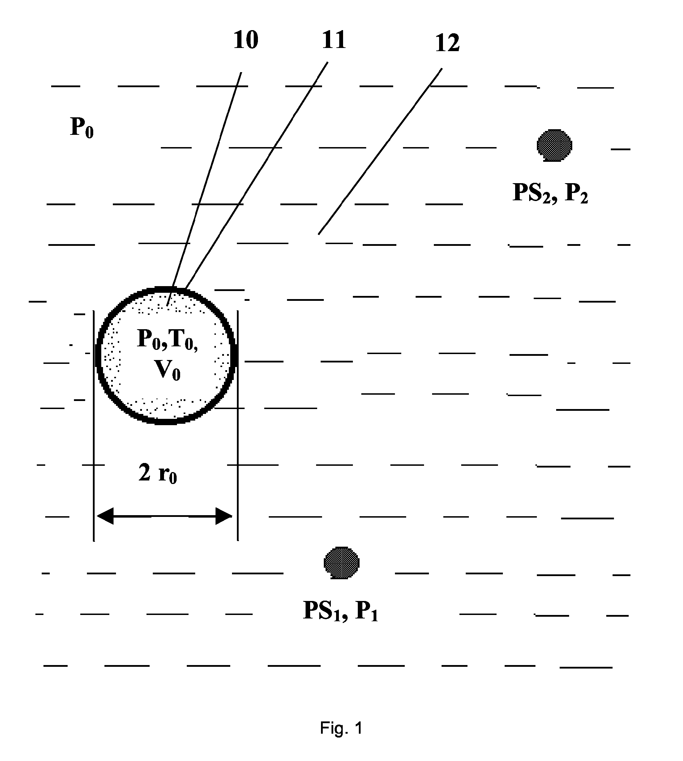

Zur Bestimmung der Zündbedingungen für ein Gasgemisch 10 wird zunächst eine Blase 11 mit einem definierten, explosionsfähigen Gasgemisch 10 in einer Flüssigkeit 12 erzeugt (Fig. 1). Dies kann beispielsweise durch eine Düse realisiert werden.

Die Blase 11 hat einen Anfangsradius $r_0$. Das Gasgemisch 10 besitzt ein Volumen $V_0$, eine Anfangstemperatur $T_0$ und einen Anfangsdruck $P_0$. Die Flüssigkeit 12 besitzt anfänglich ebenfalls den Anfangsdruck $P_0$. Vorzugsweise besitzt das Gasgemisch 10 nach Einbringen in die Flüssigkeit 12 die gleiche Temperatur $T_0$ wie die Flüssigkeit 12. Ist dies nicht der Fall, kann nach Einbringen des Gasgemisches 10 in die Flüssigkeit 12 zunächst eine ausreichende Zeit abgewartet werden, so dass das Gasgemisch 10 die Temperatur der Flüssigkeit 12 annimmt. Sofern die Temperaturen von Gasgemisch 10 und Flüssigkeit 12 nicht übereinstimmen, muss die Temperatur des Gasgemisches 10 gesondert bestimmt werden.

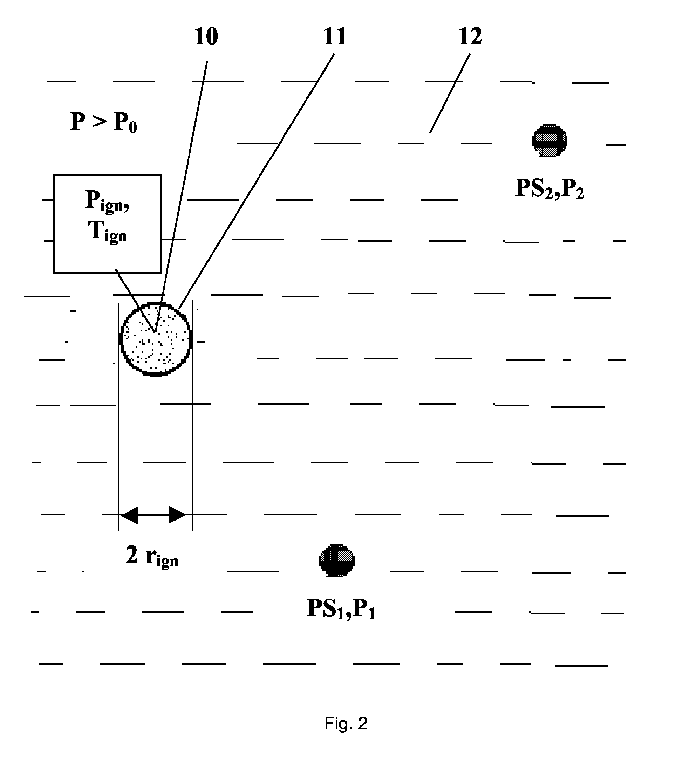

Die Blase 11 aus dem Gasgemisch 10 wird durch eine kontrollierte Erhöhung des Druckes $P > P_0$ in der Flüssigkeit 12 komprimiert (Fig. 2). Während der Kompression steigt auch der Druck in der Blase 11 aus dem Gasgemisch 10. Abhängig von der Art der Kompression kann sich auch die Temperatur des Gasgemisches 10 in der Blase 11 erhöhen. Während dieses Prozesses kann eine Zündung des Gasgemisches 10 in der Blase 11 erfolgen.

Der Radius der Blase 11 zum Zeitpunkt der Zündung wird im Folgenden mit $r_{ign}$ bezeichnet. Der Druck und die Temperatur in der Blase 11 zum Zeitpunkt der Zündung sind die Zündbedingungen $P_{ign}$ und $T_{ign}$ des zu untersuchenden Gasgemisches 10. Aus den anfänglichen Druck- und Temperaturwerten $P_0$ und $T_0$ lassen sich bei Kenntnis der Erhöhung des Druckes P der Flüssigkeit 12 die Zündbedingungen $P_{ign}$ und $T_{ign}$ im Zündzeitpunkt $t_{ign}$ herleiten. Dazu ist es jedoch wichtig, den genauen Zündzeitpunkt $t_{ign}$ zu kennen. Dieser Zündzeitpunkt $t_{ign}$ kann beispielsweise mit optischen Verfahren oder mit Druckmessungen bestimmt werden. So wurde im Ausführungsbeispiel eine optische Messung mit einer hinreichend lichtempfindlichen und schnellen Aufnahmetechnik verwendet. Dazu wurden optische Aufnahmen der Lichtemission einer Blasenexplosion vorgenommen, wobei die verwendete Kamera 1.000.000 Bilder pro Sekunde aufnahm. Fig. 5 zeigt entsprechende Lichtbildaufnahmen des in die Flüssigkeit 12 eingebrachten Gasgemisches 10 vor der Druckerhöhung der Flüssigkeit 12 (0 $\mu$s), während der Druckerhöhung der Flüssigkeit 12 (49 $\mu$s) sowie während (50 $\mu$s) und nach (51 $\mu$s-78 $\mu$s) der Selbstzündung des Gasgemisches 10. Das Gasgemisch 10 in der Blase 11 war im Ausführungsbeispiel eine Mischung aus Sauerstoff und Cyclohexan im Verhältnis von 0.87 / 0.13 (in Stoffmengen) bei 293 K und 1 bar. Zum Zeitpunkt 0 $\mu$s wird der Druck P in der Umgebung der Blase 11 (also in der Flüssigkeit 12) stoßartig erhöht. Dadurch schrumpft die Blase 11. Die Zündung des Gasgemisches 10 findet bei 50 $\mu$s statt. Die Blasenexplosion hat sich bei 52 $\mu$s auf die gesamte Blase 11 ausgebreitet. Von 53 $\mu$s bis 55 $\mu$s erkennt man die Ausbreitung der kugelförmigen Stoßwelle $SW_b$.

Da die Blase 11 regelmäßig einen Auftrieb besitzen wird, muss der Druck (im Gefäß) abgeschlossen und die Explosion eingetreten sein, bevor die Blase 11 den Sichtbereich (des verwendeten Gefäßes bzw. der verwendeten Lichtbildkamera) verlassen hat. Dies kann erleichtert werden durch verschiedene Maßnahmen, wie z. B. erhöhte Viskosität der Flüssigkeit und hinreichend große Fenster.

Aus dem ermittelten Zündzeitpunkt $t_{ign}$ kann nun auf die gesuchten Zündbedingungen $P_{ign}$ und $T_{ign}$ geschlossen werden. Eine Bestimmung des Zündzeitpunktes $t_{ign}$ kann alternativ über die zwei Drucksensoren PS1 und PS2 erfolgen, die unterschiedlich von der Blase 11 beabstandet sind. Daher werden die Drucksensoren PS1 und PS2 auch zu unterschiedlichen Zeitpunkten $t_1$ und $t_2$ von der Stoßwelle $SW_b$ erfasst. Aus der Zeitdifferenz kann auf die Ausbreitungsgeschwindigkeit der Stoßwelle $SW_b$ und damit auf den Zündzeitpunkt $t_{ign}$ geschlossen werden.

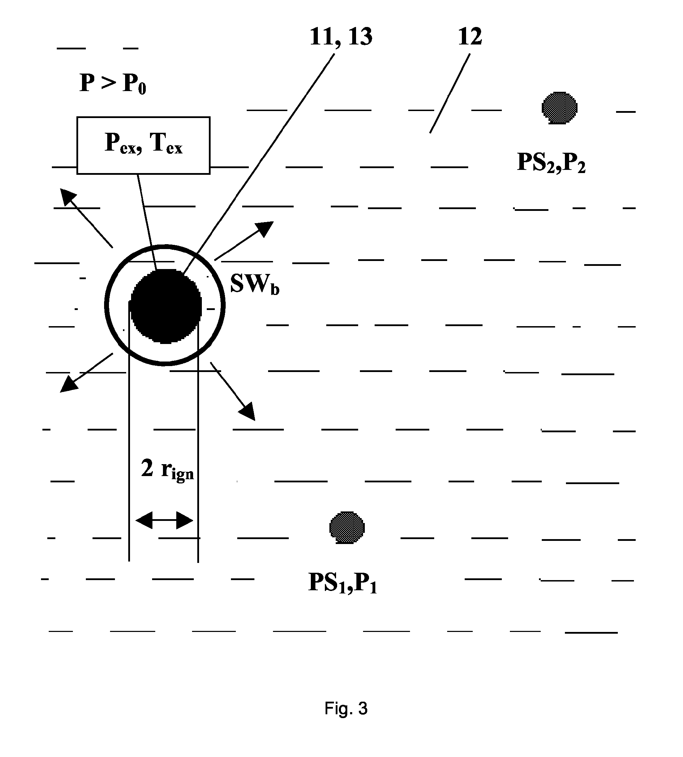

Weiterhin ist es mit dem erfindungsgemäßen Verfahren möglich, den maximalen Druck (Explosionsdruck) $P_{ex}$ zu bestimmen, der während der Explosion des Gasgemisches 10 in der Blase 11 auftritt. Das Verhältnis von Explosionsdruck $P_{ex}$ zum Druck bei der Zündung $f = P_{ex}/P_{ign}$ wird Druckanstiegsfaktor genannt. Nach der Explosion des Gasgemisches 10 in der Blase 11 wird eine kugelförmige Stoßwelle $SW_b$ in die umgebende Flüssigkeit 12 ausgesandt (Fig. 3). Die Druckspitze $P_{SWb}$ dieser Stoßwelle $SW_b$ hängt von ihrem Abstand L zu der explodierten Blase 11, von $r_{ign}$, von $P_{ign}$ und von f ab. Dieser Zusammenhang ist in der folgenden Gleichung dargestellt.

$$P_{SW_b} = f \cdot \frac{P_{ign} \cdot \alpha \cdot r_0}{L + \alpha \cdot r_0}, \qquad (1)$$

mit $\alpha = \dfrac{r_{ign}}{r_0}$

Alle unbekannten Größen in Gleichung (1) können mit Hilfe von Druckmessungen an den Positionen P1, P2 mit verschiedenen Abständen zur Blase 11 und unter Kenntnis der Art der Kompression bestimmt werden. Es besteht auch die Möglichkeit, das Verhältnis $\alpha = r_{ign}/r_0$ mit Hilfe von optischen Methoden zu bestimmen. Die Zündtemperatur $T_{ign}$ kann man mit dem idealen Gasgesetz nach folgender Gleichung berechnen:

$$T_{ign} = \frac{4}{3} \cdot \pi \cdot \frac{P_{ign} \cdot (\alpha \cdot r_0)^3}{n \cdot R}, \qquad (2)$$

wobei n die Stoffmenge des Gasgemisches 10 in der Blase 11 zum Zündzeitpunkt $t_{ign}$ ist. Mit R ist die universelle Gaskonstante bezeichnet.

Wenn sich die Zusammensetzung des Gasgemisches 10 während der Kompression nicht ändert, kann n nach dem idealen Gasgesetz angewandt auf den Zustand der Blase 11 vor der Kompression berechnet werden. Diesen Zusammenhang gibt die folgende Gleichung an.

$$n = \frac{4}{3} \cdot \pi \cdot \frac{P_0 \cdot r_0^{\,3}}{R \cdot T_0} \,, \qquad\qquad (3)$$

wobei $P_0$ und $T_0$ der Anfangsdruck bzw. die Anfangstemperatur bezeichnen.

Für den Fall, dass n während der Kompression der Blase 11 nicht konstant ist, wird n durch Simulation der relevanten physikalischen Prozesse in der Blase 11 berechnet.

Für einige Anwendungen kann es wichtig sein, die zeitliche Entwicklung des Druckes P und der Temperatur T in der Blase 11 bis zum Erreichen der Zündbedingungen $P_{ign}$ und $T_{ign}$ zu kennen. Diese zeitlichen Entwicklungen können berechnet werden unter der Voraussetzung, dass die Art der Blasenkompression bekannt ist. Zur Illustration werden im Folgenden zwei Beispiele vorgestellt:

Beispiel 1 - Adiabatische oder fast adiabatische Blasenkompression

Wenn die Kompression der Blase 11 hinreichend schnell verläuft, sind die Wärmeverluste an der Blasenoberfläche vernachlässigbar klein und die Blasenkompression kann als adiabatisch oder nahezu adiabatisch betrachtet werden. Ob die Annahme einer adiabatischen Kompression angewandt werden kann oder nicht, hängt von Parametern des Systems (hauptsächlich vom Blasenradius, von der Dauer der Kompression, von der thermalen Diffusionsfähigkeit des Gasgemisches in der Blase 11 und der Temperatur der Flüssigkeit 12 in der Umgebung der Blase 11) ab und kann berechnet werden.

Es sei darauf hingewiesen, dass die Wärmeverluste an der Oberfläche der Blase 11 1 grundsätzlich einige Zeit benötigen, um wesentliche Abweichungen der Durchschnittstemperatur in der Blase 11 vom adiabatischen Wert zu verursachen. Darüber hinaus wird eine noch längere Zeit benötigt, bevor die Temperatur am Mittelpunkt der Blase 11, das heißt. an der heißesten Stelle während der Blasenkompression, von den Wärmeverlusten beeinflusst wird.

So kann beispielsweise eine stoßinduzierte Kompression von Blasen 11 mit einem Durchmesser von weniger als 7 mm auf ein Drittel des Anfangsdurchmessers bei einer Kompressionsdauer von etwa 50 μs als adiabatisch betrachtet werden.

Für den einfachen Fall, dass der Adiabatenexponent γ konstant ist, gilt:

$$P_{ign} = P_0 \cdot \left( \frac{V_0}{V_{ign}} \right)^{\gamma},$$

und

$$T_{ign} = T_0 \cdot \left( \frac{V_0}{V_{ign}} \right)^{\gamma - 1}$$

Zur Illustration der Berechnung der Zündbedingungen nach den obigen Gleichungen ist der Bereich der Drücke und Temperaturen, die durch Kompression in der Blase 11 erreicht werden können, in den Figuren 6 und 7 dargestellt. Die Berechnungen wurden für ein Gasgemisch, mit einem Anfangsdruck von 1 bar, einer Anfangstemperatur von 273 K bis 373 K und einem Adiabatenexponent γ = 1.666 (Fig. 6) bzw. γ = 1.2 (Fig. 7) durchgeführt. Die mit "+" gekennzeichnete Fläche zwischen den Kurven in den Fig. 6a) und 7a) ist der hierbei erreichbare Bereich von Drücken und Temperaturen. Die Fig. 6b) und 7b) zeigen jeweils den auf den Anfangsradius $r_0$ der Gasblase 11 normierten inversen Blasenradius $r_0/r$ als Funktion des logarithmischen Druckes.

Beispiel 2 - Isotherme oder nahezu isotherme Blasenkompression

Die Größe der Blase 11 und die Geschwindigkeit der Druckerhöhung in der Flüssigkeit 12 können so gewählt werden, dass die Wärmeverluste an der Blasenoberfläche während der Kompression so hoch sind, dass die Kompression praktisch isotherm ist. In diesem Fall ist die Zündtemperatur $T_{ign}$ gleich der Anfangstemperatur $T_0$.

$$T_{ign} = T_0$$

Der Zünddruck $P_{ign}$ ergibt sich dann zu:

$$P_{ign} = P_0 \cdot \frac{V_0}{V_{ign}}$$

(nach dem idealen Gasgesetz).

Ob die Annahme einer fast isothermen Kompression zutreffend ist, kann mit der in Beispiel 1 zitierten Berechnung beurteilt werden.

Durch die oben genannten Beispiele wurde erläutert, dass durch die Art der Druckerhöhung der Flüssigkeit 12, insbesondere durch den zeitlichen Verlauf der Druckerhöhung der Druck und die Temperatur in der Blase 11 gesteuert werden können.

Ein besonderer Vorteil des erfindungsgemäßen Verfahrens besteht darin, dass es sicherer als andere Verfahren ist, weil für eine Messung nur ein sehr kleines Probenvolumen, das heißt das Volumen einer einzelnen Blase 11, benötigt wird und weil die bei der Explosion der Gasblase 11 emittierte Stoßwelle von der umgebenden Flüssigkeit wesentlich abgeschwächt wird. Weiterhin lässt sich das erfindungsgemäße Verfahren sehr preiswert für sehr hohe Drücke und Temperaturen realisieren.

Bezugszeichenliste

10    Gasgemisch
11    Blase
12    Flüssigkeit
13    Reaktionsprodukte nach der Explosion

$V_0$    definiertes Volumen des Gasgemisches
$T_0$    Anfangstemperatur des Gasgemisches
$P_0$    Anfangsdruck des Gasgemisches
$T_{ign}$    Temperatur des Gasgemisches im Zündzeitpunkt
$P_{ign}$    Druck des Gasgemisches im Zündzeitpunkt
$t_{ign}$    Zündzeitpunkt
$SW_b$    Druckwelle
PS1    erster Drucksensor
$P_1$    Ort des ersten Drucksensors
PS2    zweiter Drucksensor
$P_1$    Ort des zweiten Drucksensors
$\Delta P$    Druckanstieg
$\Delta T$    Temperaturanstieg

**Patentansprüche**

**1.** Verfahren zur Bestimmung der Zündbedingungen ($T_{ign}$, $P_{ign}$) für ein Gas oder ein Gasgemisch (10) mit folgenden Verfahrensschritten:

- Einbringen eines definierten Volumens ($V_o$) des Gases oder Gasgemisches (10) in eine Flüssigkeit (12), wobei das in die Flüssigkeit (12) eingebrachte Gas oder Gasgemisch (10) eine Anfangstemperatur ($T_0$) und einen Anfangsdruck ($P_0$) aufweist,

- zeitlich definierte Erhöhung des Druckes der Flüssigkeit (12),

- Bestimmung des Zeitpunktes ($t_{ign}$) der Zündung des Gases oder Gasgemisches (10), wobei aus der Anfangstemperatur ($T_0$) und dem Anfangsdruck ($P_0$) des Gases oder Gasgemisches (10), aus der zeitlich definierten Erhöhung des Druckes der Flüssigkeit (12) sowie aus dem Zündzeitpunkt ($t_{ign}$) die Temperatur ($T_{ign}$) und der Druck ($P_{ign}$) des Gases oder Gasgemisches (10) im Zündzeitpunkt ($t_{ign}$) ermittelt werden.

2. Verfahren nach Anspruch 1,
**dadurch gekennzeichnet, dass**
die Bestimmung des Zeitpunktes ($t_{ign}$) der Zündung des Gases oder Gasgemisches (10) mittels eines optischen Verfahrens erfolgt.

3. Verfahren nach Anspruch 2,
**dadurch gekennzeichnet, dass**
vom Gas oder Gasgemisch (10) zur Bestimmung des Zeitpunktes ($t_{ign}$) der Zündung des Gases oder Gasgemisches (10) während der zeitlich definierten Erhöhung des Druckes der Flüssigkeit (12) Lichtbildaufnahmen gefertigt werden und durch Auswertung der Lichtbildaufnahmen der Zündzeitpunkt ($t_{ign}$) bestimmt wird.

4. Verfahren nach Anspruch 3,
**dadurch gekennzeichnet, dass**
während der zeitlich definierten Erhöhung des Druckes der Flüssigkeit (12) sukzessive Lichtbildaufnahmen mit einer Frequenz von größer als 1 KHz gefertigt werden.

5. Verfahren nach Anspruch 3,
**dadurch gekennzeichnet, dass**
während der zeitlich definierten Erhöhung des Druckes der Flüssigkeit (12) sukzessive Lichtbildaufnahmen mit einer Frequenz von größer als 100 KHz gefertigt werden.

6. Verfahren nach Anspruch 1,
**dadurch gekennzeichnet, dass**
zur Bestimmung des Zeitpunktes ($t_{ign}$) der Zündung des Gases oder Gasgemisches (10) Druckmessungen an mindestens zwei Punkten ($P_1$, $P_2$), die vom in die Flüssigkeit (12) eingebrachten Gas oder Gasgemisch (10) unterschiedlich beabstandet sind, erfolgt, wobei der Zündzeitpunkt ($t_{ign}$) des Gases oder Gasgemisches (10) aus den unterschiedlichen Zeitpunkten ($t_1$, $t_2$), zu denen die durch die Zündung des Gases oder Gasgemisches (10) entstandene Druckwelle ($SW_b$) die Punkte ($P_1$, $P_2$) erreicht, ermittelt wird.

7. Verfahren nach einem der vorhergehenden Ansprüche,
**dadurch gekennzeichnet, dass**
die zeitlich definierte Erhöhung des Druckes der Flüssigkeit (12) derart vorgenommen wird, dass der im Gas oder Gasgemisch (10) erzeugte Druckanstieg ($\Delta P$) mit einem vordefinierten Temperaturanstieg ($\Delta T$) einhergeht.

8. Verfahren nach einem der vorhergehenden Ansprüche,
**dadurch gekennzeichnet, dass**
das definierte Volumen ($V_o$) des Gases oder Gasgemisches (10) mittels einer Düse in die Flüssigkeit (12) eingebracht wird.

9. Verfahren nach einem der vorhergehenden Ansprüche,
**dadurch gekennzeichnet, dass**
das Volumen der Flüssigkeit (12) mindestens das 100fache des Volumens ($V_o$) des Gases oder Gasgemisches (10) beträgt.

10. Verfahren nach einem der vorhergehenden Ansprüche,
**dadurch gekennzeichnet, dass**
die Flüssigkeit (12) in einem Behältnis gehalten und das Volumen ($V_o$) des Gases oder Gasgemisches (10) derart im Behältnis angeordnet wird, dass das Gas oder Gasgemisch (10) in sämtliche Richtungen über eine Distanz von der Flüssigkeit (12) umgeben ist, wobei diese Distanz mindestens das 10fache des Durchmessers des Volumens

($V_o$) des Gases oder Gasgemisches (10) beträgt.

11. Vorrichtung zur Bestimmung der Zündbedingungen ($T_{ign}$, $P_{ign}$) für ein Gas oder ein Gasgemisch (10) aufweisend:

- Mittel zum Einbringen eines definierten Volumens ($V_o$) des Gases oder Gasgemisches (10) in eine Flüssigkeit (12),
- Mittel zur zeitlich definierten Erhöhung des Druckes der Flüssigkeit (12),
- Mittel zur Bestimmung des Zeitpunktes ($t_{ign}$) der Zündung des Gases oder Gasgemisches (10), und
- Mittel zur Berechnung von Temperatur ($T_{ign}$) und Druck ($P_{ign}$) des Gases oder Gasgemisches (10) im Zündzeitpunkt ($t_{ign}$) aus Anfangstemperatur ($T_0$) und Anfangsdruck ($P_0$) des Gases oder Gasgemisches (10), aus der zeitlich definierten Erhöhung des Druckes der Flüssigkeit (12) sowie aus dem Zündzeitpunkt ($t_{ign}$) des Gases oder Gasgemisches (10).

12. Vorrichtung nach Anspruch 11,
**dadurch gekennzeichnet, dass**
die Vorrichtung ein Gefäß aufweist, in dem sich die Flüssigkeit befindet.

13. Vorrichtung nach Anspruch 12,
**dadurch gekennzeichnet, dass**
das Gefäß ein Autoklav ist.

14. Vorrichtung nach einem der Ansprüche 11 bis 13,
**dadurch gekennzeichnet, dass**
das Mittel zur Berechnung von Temperatur ($T_{ign}$) und Druck ($P_{ign}$) des Gases oder Gasgemisches (10) ein Datenverarbeitungsgerät umfasst.

15. Vorrichtung nach einem der Ansprüche 11 bis 14,
**dadurch gekennzeichnet, dass**
das Mittel zum Einbringen eines definierten Volumens ($V_0$) des Gases oder Gasgemisches (10) eine Pipette aufweist.

16. Vorrichtung nach einem der Ansprüche 11 bis 15,
**dadurch gekennzeichnet, dass**
das Mittel zur zeitlich definierten Erhöhung des Druckes der Flüssigkeit (12) einen mechanisch betriebenen Kolben aufweist.

17. Vorrichtung nach einem der Ansprüche 11 bis 16,
**dadurch gekennzeichnet, dass**
das Mittel zur Bestimmung des Zeitpunktes ($t_{ign}$) der Zündung des Gases oder Gasgemisches (10) eine Lichtbildkamera aufweist, die mehr als 100.000 Lichtbilder pro Sekunde aufnimmt.

18. Vorrichtung nach einem der Ansprüche 11 bis 16,
**dadurch gekennzeichnet, dass**
das Mittel zur Bestimmung des Zeitpunktes ($t_{ign}$) der Zündung des Gases oder Gasgemisches (10) mindestens zwei Drucksensoren sowie ein Datenverarbeitungsgerät aufinreist, wobei mindestens zwei der Drucksensoren einen unterschiedlichen Abstand vom in die Flüssigkeit (12) eingebrachten Gas oder Gasgemisch (10) aufweisen.

10   11   12

$P_0$

$PS_2, P_2$

$P_0, T_0, V_0$

$2 r_0$

$PS_1, P_1$

Fig. 1

Fig. 2

Fig. 3

Fig. 4

Fig. 5

a)

b)

Fig. 6

Fig. 7

**EP 1 729 117 A2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **HIGH, M. S ; R. P. DANNER.** Prediction of upper flammability limit by a group contribution method. *Ind. Eng. Chem. Res.,* 1987, vol. 26, 1395
- *RÜFUNG VON MINERALÖL-KOHLENWASSERSTOFFEN - BESTIMMUNG DER ZÜNDTEMPERATUR,* 2003
- *BESTIMMUNG DER EXPLOSIONSGRENZEN VON GASEN UND DÄMPFEN,* 2003
- STANDARD TEST METHOD FOR CONCENTRATION LIMITS OF FLAMMABILITY OF CHEMICALS (VAPORS AND GASES. *Rev.,* 2001, vol. 01
- STANDARD PRACTICE FOR DETERMINING LIMITS OF FLAMMABILITY OF CHEMICALS AT ELEVATED TEMPERATURE AND PRESSURE. *Rev.,* 1999, vol. 83
- **M. GOETHALS ; B. VANDERSTRAETEN ; J. BERGHMANS ; G. DE SMEDT ; S. VLIEGEN ; E. VAN'T OOST.** Experimental study of the flammability limits of toluene-air mixtures at elevated pressure and temperature. *Journal of Hazardous Materials,* 31. Dezember 1999, vol. 70 (3), 93-104
- **M. CARON ; M. GOETHALS ; G. DE SMEDT ; J. BERGHMANS ; S. VLIEGEN ; E. VAN'T OOST ; A. VAN DEN AARSSEN.** Pressure dependence of the auto-ignition temperature of methane/air mixtures. *Journal of Hazardous Materials,* 19. Marz 1999, vol. 65 (3), 233-244
- **M. GÖDDE ; E. BRANDES ; W. O. MÖLLER ; H. K. GAMMENGA.** Zündtemperatur bei erhöhtem Ausgangsdruck. *Kolloquium zu Fragen der chemischen und physikalischen Sicherheitstechnik,* 01. Juni 1999, vol. 8, 71-75